# EUROPÄISCHE PATENTSCHRIFT

(11) **EP 3 542 449 B1**
(45) Veröffentlichungstag und Bekanntmachung des Hinweises auf die Patenterteilung: **19.08.2020**
(21) Anmeldenummer: 17801433.8
(22) Anmeldetag: 15.11.2017
(51) Int. Cl.: H02K 5/22, H02K 7/116, H02K 11/026, H02K 23/66

(54) **ELEKTRISCHE MASCHINE MIT EINEM BÜRSTENHALTER-BAUTEIL UND EINEM STECKERMODUL**
ELECTRIC MACHINE WITH BRUSH HOLDING-ELEMENT AND A CONNECTOR MODULE
MACHINE ÉLECTRIQUE AVEC UN SUPPORT DE BALAI ET UN MODULE DE CONNEXION

(30) Priorität: 16.11.2016 DE 102016222532
(43) Veröffentlichungstag der Anmeldung: 25.09.2019
(73) Patentinhaber: Robert Bosch GmbH, 70442 Stuttgart (DE)
(72) Erfinder: SZUCS, Norbert, 1078 Budapest (HU); DOMSIK, Istvan, 1214 Budapest (HU); ELLERBY, Marc, 77815 Buehl (DE); SCHEURICH, Stephan, 76534 Baden-Baden (DE); UNGVARI, Peter, 1172 Budapest (HU); BODNAR, Pal, 2143 Kistarcsa (HU)
(86) Internationale Anmeldenummer: PCT/EP2017/079258
(87) Internationale Veröffentlichungsnummer: WO 2018/091493

(56) Entgegenhaltungen:
- EP-A1- 0 618 659
- US-A1- 2004 232 784
- US-A1- 2007 103 013
- US-A1- 2011 156 545

## Beschreibung

Die vorliegende Erfindung betrifft eine elektrische Maschine mit einem Bürstenhalter-Bauteil und einem Steckermodul, sowie ein entsprechendes Baukastensystem nach der Gattung der unabhängigen Ansprüche.

### Stand der Technik

Mit der DE 42 25 496 A1 ist eine elektrische Antriebseinheit bekannt geworden, bei der zwischen einem Poltopf und einem Getriebegehäuse eine Zwischenzarge angeordnet ist, in die ein Bürstenhalter integriert ist. Die Antriebseinheit ist dabei modular aufgebaut, wobei ein separat ausgebildeter Stecker an unterschiedlichen Positionen an der Antriebseinheit angeordnet ist. Dadurch können beispielsweise unterschiedliche Varianten mit oder ohne Elektronikgehäuse realisiert werden, und je nach Einbaulage der Antriebseinheit der Steckeranschluss entsprechend den Raumverhältnissen und dem kundenspezifischen Gegenstecker angepasst werden. Nachteilig bei solch einer Ausführung ist, dass die Zwischenzarge mit dem Bürstenhalter je nach Anwendung mit unterschiedlichen Elektronikbauteilen ausgestattet werden muss und insgesamt drei separate Bauteile, nämlich die Zwischenzarge, der Stecker und das Elektronikgehäuse variiert werden. Dabei ist besonders die Abwandlung des Designs der Zwischenzarge mit dem Bürstenhalter sehr aufwendig, da die Justierung der Kohlebürsten großen Einfluss auf eine unerwünschte Geräuschentwicklung im Betrieb der Antriebseinheit haben. Die Druckschrift US20040232784 A1 zeigt eine elektrische Maschine zum Verstellen beweglicher Teile im Kraftfahrzeug entsprechend der Präambel des unabhängigen Anspruchs 1.

### Offenbarung der Erfindung

Die erfindungsgemäße elektrische Maschine mit den Merkmalen des unabhängigen Anspruchs 1 hat demgegenüber den Vorteil, dass das Bürstenträger-Bauteil für alle Maschinenvarianten immer gleichbauend ausgebildet sein kann, und daher die Bürsten immer in gleicher Weise im Polgehäuse gegenüber dem Kommutator positioniert werden. Die gesamte Varianz für unterschiedliche Anwendungen der elektrischen Maschine ist in das Steckermodul gelegt, das einerseits mit unterschiedlichen Steckerabgängen und andererseits mit unterschiedlichen Elektronikkomponenten entsprechend der gewünschten Kundenanforderung ausgebildet ist. Dadurch, dass das Bürstenhalter-Bauteil immer unabhängig von dem Steckermodul radial im Polgehäuse zentriert wird, hat eine Krafteinwirkung auf den Anschluss-Stecker keinen direkten Einfluss auf die Positionierung der Bürsten, so dass hierbei keine ungewünschten Geräusche entstehen. Damit sich das Steckermodul ebenfalls direkt am Polgehäuse zentrieren kann, erstrecken sich axiale Fortsätze des Steckermoduls in entsprechende Ausnehmungen im Bürstenhalter-Bauteil. Dadurch können sich die axialen Fortsätze radial direkt am Polgehäuse abstützen, ohne dabei das Bürstenhalter-Bauteil zu berühren.

Durch die in den abhängigen Ansprüchen aufgeführten Maßnahmen sind vorteilhafte Weiterbildungen und Verbesserungen, der in dem unabhängigen Anspruch vorgegebenen Ausführungen möglich. So weist das Steckermodul vorteilhaft eine Basisplatte auf, die das Polgehäuse axial abschließt, wobei lediglich die Rotorwelle durch eine entsprechende Aussparung in der Basisplatte aus dem Polgehäuse herausragt. Dadurch könnend die Elektronikbauteile vor Spänen und Kohlestaub des Motorbereichs geschützt werden. Der Anschluss-Stecker ist beispielsweise radial an die Basisplatte angefügt, so dass auch der Gegenstecker radial komplett außerhalb des Polgehäuses in den Anschlussstecker eingefügt werden kann.

Besonders kostengünstig kann das Steckermodul aus Kunststoff hergestellt werden, wobei die elektrisch leitenden Anschluss-Pins als Einlegeteile ausgebildet sind, die eine elektrische Verbindung zu den Bürsten und gegebenenfalls zu anderen elektronischen Bauteilen herstellen. Dabei kann der Anschluss-Stecker leicht an den entsprechenden kundenspezifischen Gegenstecker angepasst werden, wobei die Basisplatte in ihrer Grundstruktur gleichbleibend ausgebildet sein kann. Dadurch kann ein solches Steckermodul spritzgusstechnisch wesentlich einfacher variiert werden, als ein relativ komplex ausgebildetes Bürstenhalter-Bauteil.

Um die Toleranzkette bei der Montage der elektrischen Maschine zu verringern, wird erfindungsgemäß das Steckermodul mittels seiner an der Basisplatte angeformten axialen Fortsätze direkt an der Innenseite es Polgehäuses zentriert. Somit hat sowohl das Steckermodul, als auch das Bürstenhalter-Bauteil an ihrem jeweiligen Umfang Zentrier- bzw. Positionierflächen ausgebildet, die sich unabhängig voneinander jeweils radial direkt am Polgehäuse abstützen.

Damit die elektrische Maschinen in relativ engen Räumen, wie beispielweise einer Fahrzeugseitentür verbaut werden kann, kann der Querschnitt des Polgehäuses von einem Kreis abweichen, und zwei abgeflachte Seiten, die beispielsweise näherungsweise parallel zueinander ausgebildet sind aufweisen. Daher ist es besonders günstig, wenn sowohl das Steckermodul, als auch das Bürstenhalter-Bauteil jeweils zumindest zwei Zentrierflächen aufweisen, die sich an den gegenüberliegenden ebenen Innenwänden des Polgehäuses abstützen. Zusätzlich sind am Steckermodul bevorzugt zwei weitere axiale Fortsätze ausgebildet, die sich radial gegenüberliegen und sich an den kreissegmentförmigen Innenwänden des Polgehäuses radial abstützen. Ebenso weist vorteilhaft auch das Bürstenhalter-Bauteil entsprechende Zentrierflächen im Bereich der kreisförmigen Innenwände des Polgehäuses auf.

Zur mechanischen Endkopplung des Steckermoduls vom Bürstenhalter-Bauteil sind die Aussparungen im Bürstenhalter-Bauteil erfindungsgemäß größer ausgebildet, als die korrespondierenden axialen Fortsätze des Steckermoduls. Dadurch kann verhindert werden, dass sich das Steckermodul radial unmittelbar am Bürstenhalter-Bauteil abstützt, wodurch die Positionierung der Bürsten gegenüber dem Kommutator durch eine unerwünschte Verkippung oder Bewegung des Steckermoduls nicht beeinträchtigt wird.

An der Basisplatte des Steckermoduls ist ein umlaufender Rand ausgebildet, der einerseits am Flansch des Polgehäuses und axial gegenüberliegend an einem weiteren Gehäuse, insbesondere einem Getriebe-oder Elektronikgehäuse axial anliegt. Für eine einheitliche Schnittstelle zwischen dem Polgehäuse und dem jeweiligen Getriebegehäuse kann der umlaufende Rand des Steckermoduls für verschiedene Variationen des Steckermoduls immer einheitlich ausgebildet werden, so dass auch jeweils gleiche Verbindungselemente, beispielweise Schrauben, verwendet werden können.

Besonders bevorzugt ist an dem umlaufenden Rand des Steckermoduls eine Dichtung ausgebildet, die das gesamte Gehäuse der elektrischen Maschine wasserdicht abdichtet. Dabei ist der umlaufende Rand besonders günstig als radiale Umfangswand ausgebildet, die gleichzeitig auch Teil der Außenwand des Gesamtgehäuses der elektrischen Maschine ist.

Besonders vorteilhaft können radial innerhalb der Umfangswand Kontaktstecker angeordnet werden, die sich axial von der Basisplatte weg zum Getriebegehäuse hin erstrecken, um entsprechende gegenkontakte einer Elektronik innerhalb des Getriebegehäuses zu kontaktieren. Dadurch kann auch der Anschluss-stecker einer Einschubelektronik über das Steckermodul mit dem Bürstenhalter elektrisch verbunden werden.

Optional kann über dem Steckermodul eine EMV-Abschirmung angeordnet werden, die im Wesentlichen die gesamte Fläche des Steckermoduls quer zur Rotorwelle abdeckt. Dabei kann wahlweise lediglich der Bereich der Basisplatte und/oder der Bereich des radial außerhalb des Polgehäuses angeordneten Anschluss-Steckers abgeschirmt werden. Durch die Kontaktierung der EMV-Abschirmung mit dem Polgehäuse ist der gesamte Motor - und insbesondere der Bereich der Bürsten - mit einem Faraday'schem Käfig umgeben.

In einer weiteren Variante des Steckermoduls ist um dessen zentrale Aussparung ein Zentrierdom ausgebildet, der eine definierte Schnittstelle zum Getriebegehäuse gewährleistet. Zusammen mit weiteren Justierflächen am äußeren Rand des Steckermoduls kann sowohl die radiale als auch die tangentiale Positionierung vom Getriebegehäuse zum Polgehäuse optimiert werden.

Zur Montage der elektrischen Maschine wird das Bürstenträger-Bauteil axial in das Polgehäuse eingesetzt, bevor anschließend axial das Steckermodul über die Rotorwelle auf den Flansch des Polgehäuses aufgesetzt wird. Dabei wird das Bürstenträger-Bauteil axial in das Polgehäuse eingedrückt, wobei dieses sich axial an entsprechend ausgeformten Axialanschlägen am Polgehäuse abstützt.

Dabei ist das Bürstenträger-Bauteil besonders vorteilhaft axial weitestgehend innerhalb des Polgehäuses angeordnet, so dass sich das Bürstenträger-Bauteil näherungsweise über dessen gesamte axiale Ausdehnung radial an der Innenwand des Polgehäuses abstützen kann. Dadurch wird ein Verkippen oder Verkanten des Bürstenträger-Bauteils innerhalb des Polgehäuses vermieden. Die Bürsten, die hier besonders platzsparend als Hammerbürsten radial innerhalb des Bürstenträger-Bauteils angeordnet sind, sind dann durch die Umfangswand des Polgehäuses optimal abgeschirmt, um ein Emittieren von Störstrahlungen aus dem Elektromotor zu vermeiden.

Nach der Montage des Steckermoduls auf das Polgehäuse werden elektrische Leiterelemente von dem Bürstenträger-Bauteil mit dem Steckermodul elektrisch kontaktiert, und dadurch elektrisch mit den Anschluss-Pins des Anschluss-Steckers kontaktiert. Besonders einfach wird hier beispielsweise ein Anschlussdraht der Bürsten an entsprechenden Kontaktelementen des Steckermoduls verlötet oder verschweißt.

Durch die Anordnung des Anschluss-Steckers radial außerhalb des Polgehäuses kann die Einsteckrichtung und Lage des entsprechenden kundenspezifischen Gegensteckers sehr einfach an die Platzverhältnisse des Einbauraums angepasst werden, ohne das Grunddesign der Basisplatte, bzw. der Umfangswand des Steckermoduls zu ändern. Ist der Anschluss-Stecker abgewinkelt zu dem radialen Verbindungsteg ausgebildet, kann auch der kundenspezifische Gegenstecker in Axialrichtung eingesteckt werden, so dass dieser sich entlang des Polgehäuses axial erstreckt. Durch die Ausbildung eines Motor-Baukastens mit einem immer gleichbleibenden Bürstenträger-Bauteil, kann die Variation der Elektronikfunktionen, wie beispielsweise der Rotorlagenerfassung oder die elektronische Entstörung ausschließlich in das einfacher zu ändernde Steckermodul verlagert werden. Durch die gleichbleibende Polgehäuse-Schnittstelle kann dadurch eine gleichbleibend zuverlässig gute Positionierung der Bürsten gegenüber dem Kommutator gewährleistet werden und der Elektromotor trotzdem an verschiedenste Kundenanforderungen angepasst werden. Das Steckermodul kann dabei beispielweise mit unterschiedlichen Entstörelementen bestückt werden und mit unterschiedlichen Drehlagensensoren ausgebildet werden. So kann auch bei unterschiedlichen Varianten des Steckermoduls die Schnittstelle Polgehäuse - Basisplatte des Steckermoduls - Getriebegehäuse immer gleichbleibend ausgebildet werden, so dass die Flansche des Polgehäuses und des Getriebegehäuses immer zuverlässig abgedichtet sind.

Besonders vorteilhaft ist bei der elektrischen Maschine das Bürstenträger-Bauteil elektrisch mit dem Steckermodul verbunden, wobei elektrische Leiter von den Bürsten zu Kontaktelementen des Steckermoduls geführt werden - und vorzugsweise mit diesen nach der axialen Montage des Steckermoduls auf der axial dem Bürstenhalter-Bauteil gegenüberliegenden Seite verlötet oder verschweißt werden.

Die Basisplatte des Steckermoduls verläuft näherungsweise senkrecht zur Rotorwelle und liegt insbesondere unmittelbar axial am Flansch des Polgehäuses an. Das Bürstenträger-Bauteil ist vorzugsweise mit seiner in Tangentialrichtung verlaufenden Umfangswand axial vollständig innerhalb des Polgehäuses angeordnet.

Der Anschluss-Stecker des Stecker-Moduls kann mit einem Steckerkragen ausgebildet sein, innerhalb dessen Stecker-Pins für einen korrespondierenden Gegenstecker angeordnet sind. Bei einem anderen Modul kann der Stecker als Kontaktfahnen im Inneren des Stecker-Moduls ausgebildet sein, die mittels entsprechenden Klemmkontakten - beispielsweise Gabelkontakten oder einer Schneid-Klemmverbindung - kontaktiert werden. Insbesondere weist das Stecker-Modul immer einen Anschluss-Stecker auf, der direkt durch das unmittelbare Aufschieben oder Einstecken eines Gegenstecker-Elements elektrisch kontaktiert wird.

Vorteilhaft ist im Getriebegehäuse ein Untersetzungsgetriebe gelagert, das das Antriebsmoment vom Elektromotor an ein Abtriebselement weiterleitet, das insbesondere als Abtriebsritzel ausgebildet ist, das aus dem Getriebegehäuse ragt.

Bevorzugt ist das Getriebe als Schneckengetriebe ausgebildet, bei dem auf der Rotorwelle eine Schnecke angeordnet ist, die mit einem Schneckenrad im Getriebegehäuse kämmt. Dabei ragt die Rotorwelle mit der Schnecke axial durch die Basisplatte des Stecke-Moduls in das Getriebegehäuse hinein.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Gesamtansicht einer elektrischen Maschine gemäß einem ersten Ausführungsbeispiel, und
- Fig. 2 und 3: ein weiteres Ausführungsbeispiel einer elektrische Maschine vor und nach der Montage des Steckermoduls
- Fig. 4 und 5: zwei weitere Ausführungsbeispiele mit unterschiedlichen Steckermodulen.

### Beschreibung der Ausführungsbeispiele

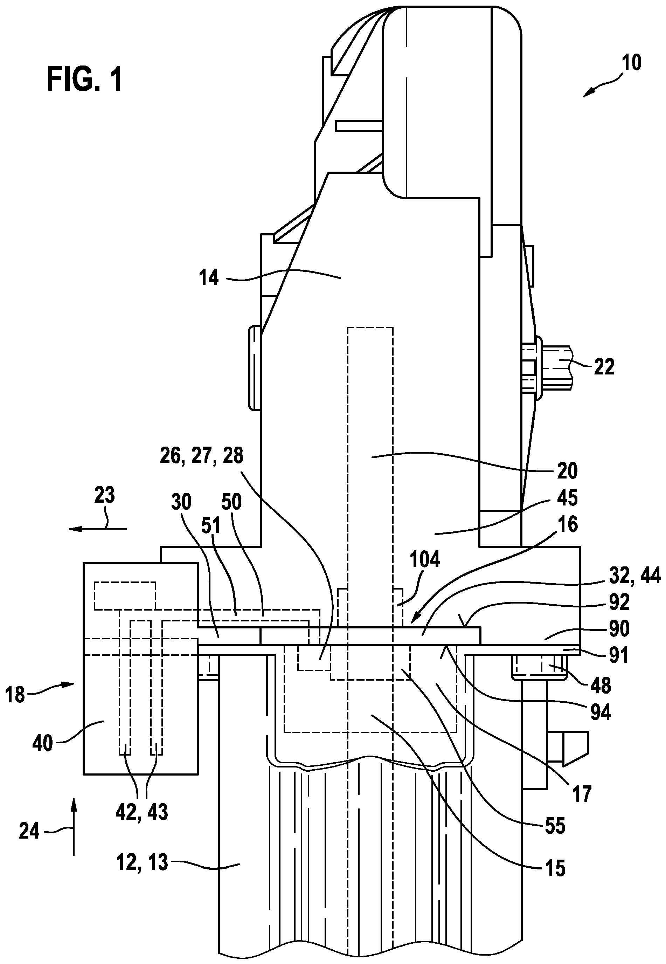

Figur 1 zeigt eine elektrische Maschine 10, wie sie beispielsweise zum Verstellen beweglicher Teile - vorzugsweise Fensterscheiben, Schiebedächer oder Sitzkomponenten - im Kraftfahrzeug eingesetzt wird. Dabei ist in einem Polgehäuse 12 ein Stator 13 angeordnet, innerhalb dem ein Rotor 15 angeordnet ist, dessen Rotorwelle 20 sich axial vom Polgehäuse 12 in ein axial sich anschließendes Getriebegehäuse 14 erstreckt. Dabei wird das Antriebsmoment von der Rotorwelle 20 auf ein im Getriebegehäuse 14 angeordnetes Getriebe übertragen, das ein Abtriebselement 22 aufweist, das mit einer nichtdargestellten Mechanik zusammen wirkt, die beispielsweise Teile eines Fahrzeugsitzes oder eine Fensterscheibe im Kraftfahrzeug bewegt. In Axialrichtung 24 ist zwischen dem Polgehäuse 12 und dem Getriebegehäuse 14 ein Steckermodul 16 angeordnet, das elektrisch mit Bürsten 26 eines separat gefertigten Bürstenträger-Bauteils 17 zur elektrischen Kontaktierung eines auf der Rotorwelle 20 angeordneten Kommutators 55 verbunden ist. Dabei können die Bürsten 26 als Hammerbürsten 27 oder Köcher-Bürsten 28 ausgebildet sein. Das Steckermodul 16 weist einen Anschluss-Stecker 18 auf, der in Radialrichtung 23 radial außerhalb des Polgehäuses 12 und vorzugsweise auch radial außerhalb des Getriebegehäuses 14 angeordnet ist. Dabei ist der Anschluss-Stecker 18 mittels eines radialen Steges 30 an das Steckermodul 16 angebunden. Das Bürstenträger-Bauteil 17 ist separat vom Steckermodul 16 hergestellt und ist radial innerhalb des Polgehäuses 12 angeordnet. Das Steckermodul 16 weist erfindungsgemäß eine Basisplatte 32 auf, die eine zentrale Aussparung 34 aufweist, durch die hindurch in Axialrichtung 24 sich die Rotorwelle 20 in das Getriebegehäuse 14 hinein erstreckt. Der Anschluss-Stecker 18 weist einen Steckerkragen 40 auf, innerhalb dessen die Anschluss-Pins 42 zur elektrischen Kontaktierung der elektrischen Maschine 10 angeordnet sind. Im Ausführungsbeispiel der Fig. 1 erstreckt sich der Steckerkragen 40 mit den Anschluss-Pins 42 in Axialrichtung 24, so dass der korrespondierende Stecker ebenfalls in Axialrichtung 24 in den Steckerkragen 40 einschiebbar ist. Aus Fig. 1 ist ersichtlich, dass das Steckermodul 16 zwischen zwei Flanschen 94, 92 des Polgehäuses 12 und des Getriebegehäuses 14 axial eingespannt ist, wobei ein äußerer Umfangsrand 44 des Steckermoduls 16 in diesem Ausführungsbeispiel gleichzeitig einen Teil der Außenwand 45 der elektrischen Maschine 10 bildet. Beispielsweise wird das Getriebe-Gehäuse 14 mit dem Polgehäuse 12 mittels Schrauben oder anderen Verbindungselementen 48 verbunden, wodurch das Steckermodul 16 zwischen dem Polgehäuse 12 und dem Getriebegehäuse 14 fest verspannt und fixiert ist. Dazu greifen die Verbindungselemente 48 durch Anschraubaugen 91 am Flansch 94 des Polgehäuses 12 hindurch in korrespondierende Gegenaufnahmen 90 im Getriebegehäuse 14.

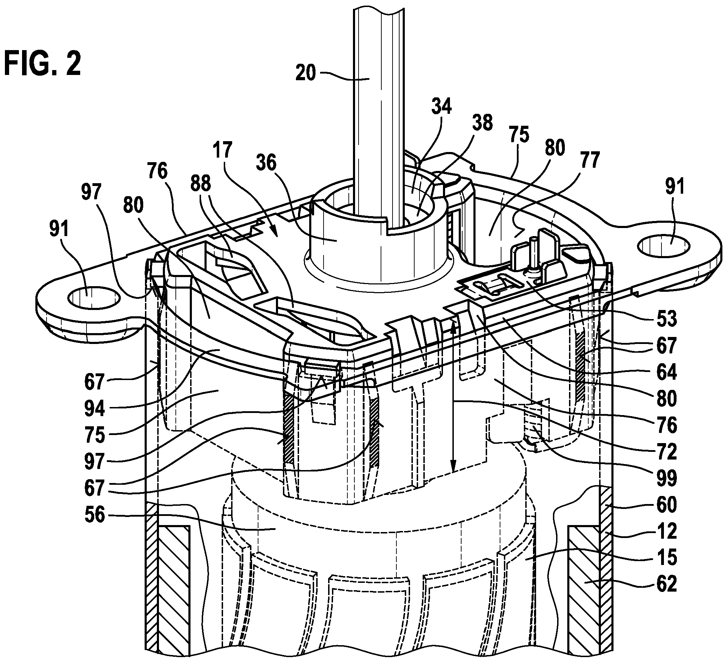

In Fig. 2 ist ein weiteres Ausführungsbeispiel einer elektrischen Maschine 10 dargestellt, bei der ein Bürstenträger-Bauteil 17 auf den Rotor 15 im Polgehäuse 12 gefügt ist. Das Bürstenträger-Bauteil 17 ist in Axialrichtung 24 weitgehend in das Polgehäuse 12 eingeschoben, so dass dieses näherungsweise axial mit dem Flansch 94 des Polgehäuses 12 abschließt. Dabei ist das Bürstenträger-Bauteil 17 über seinen gesamten Umfang von der Polgehäusewand 60 umschlossen. Im Inneren des Bürstenträger-Bauteils 17 sind die Bürsten 26 angeordnet, die radial am Kommutator 55 anliegen, der drehfest auf der Rotorwelle 15 befestigt ist. Der Kommutator 55 ist mit Wicklungen 56 des Rotors 15 verbunden, so dass sich der bestromte Rotor 15 im Magnetfeld der Statormagnete 62 dreht. Das Bürstenträger-Bauteil 17 weist an seinem äußeren Umfang Positionierungsflächen 67 auf, die das Bürstenträger-Bauteil 17 radial im Polgehäuse 12 zentrieren, wodurch die Bürsten 26 exakt gegenüber dem Kommutator 55 positioniert werden. Die Positionierflächen 67 liegen radial unmittelbar an der Innenseite 77 der Polgehäusewand 60 an. Dabei erstrecken sich die Positionierflächen 67 über einen wesentlichen Teil der axialen Ausdehnung 72 des Bürstenträger-Bauteils 17, um dessen Verkippen im Polgehäuse 12 zu verhindern. Das Polgehäuse 12 weist im Ausführungsbeispiel einen abgeflachten Kreisquerschnitt auf, so dass die Polgehäusewand 60 kreissegmentförmige Abschnitte 75 und zwei parallele, sich gegenüberliegende Abschnitte 76 aufweist. Das Bürstenträger-Bauteil 17 liegt mit jeweils mindestens einer Positionierfläche 67 - vorzugsweise mit zwei Positionierflächen 67 - an jeweils einem der genannten vier Abschnitte 75, 76 der Polgehäusewand 60 an. Durch das axiale Einpressen der Positionierflächen 67 wird das Bürstenträger-Bauteil 17 bevorzugt gleichzeitig mit der radialen Zentrierung mittels Kraftschluss axial im Polgehäuse 12 fixiert. Dabei sind am Polgehäuse 12 axiale Anschläge 97 ausgebildet, an denen das Bürstenträger-Bauteil 17 axial anliegt. Die Axialanschläge 97 können dabei an der Innenwand 77 oder im Bereich des Flansches 94 ausgeformt sein. Das Bürstenträger-Bauteil 17 weist am äußeren Umfang 64 axiale Aussparungen 80 auf, in die bei der Montage des Steckermoduls 16 an diesem angeformte axiale Fortsätze 82 axial eingefügt werden. Die axialen Aussparungen 80 des Bürstenträger-Bauteils 17 sind wieder jeweils an jedem der vier Segmente 75, 76 der Polgehäusewand 60 angeordnet. Beispielweise erstrecken sich zwei radial gegenüberliegende axiale Aussparungen 80 über die gesamte axiale Ausdehnung 72 des Bürstenträger-Bauteils 17. Zwei andere radial gegenüberliegende axiale Aussparungen 80 erstrecken sich jedoch nur über einen Teilbereich der axialen Ausdehnung 72. In der Mitte des Bürstenhalter-Bauteils 17 ist ein zentraler Rohrstumpf 36 ausgeformt, der ein Lager 38 für die Rotorwelle 20 aufnimmt. Beispielsweise ist das Lager 38 der Rotorwelle 20 in den Rohrstumpf 36 eingepresst. Dadurch wird der Kommutator 55 auf der Rotorwelle 55 exakt zu den Bürsten 26 positioniert.

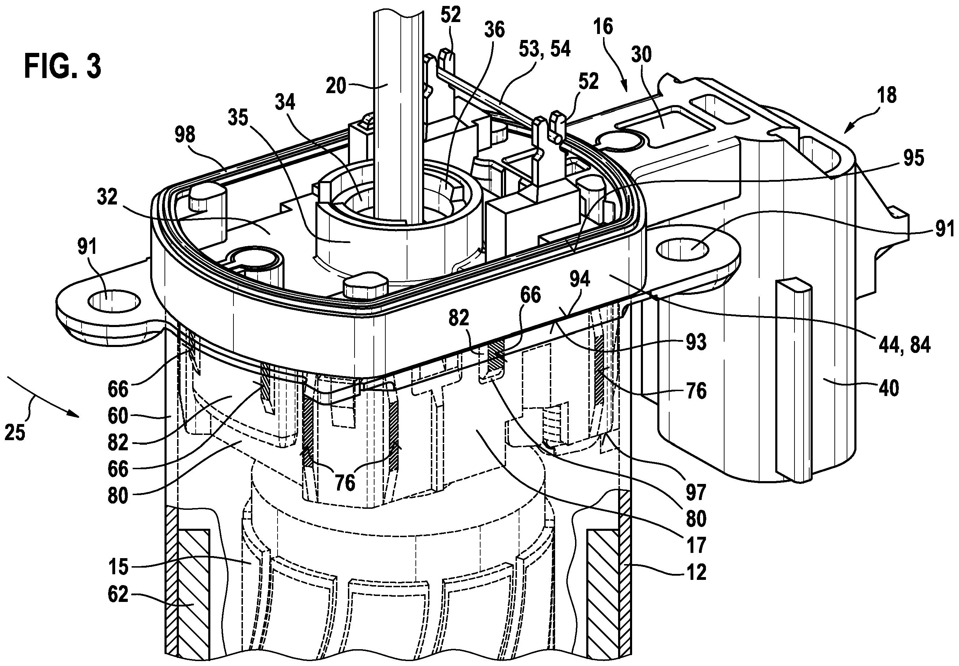

In Fig. 3 ist dargestellt, wie das Steckermodul 16 bereits axial auf das Polgehäuse 12 montiert ist. Das Steckermodul 16 weist an seiner Basisplatte 32 die axialen Fortsätze 82 auf, die in die entsprechende axiale Aussparungen 80 des Bürstenträger-Bauteils 17 eingreifen und sich in Axialrichtung 24 in das Polgehäuse 12 hinein erstrecken. Dabei weisen die axialen Fortsätze 82 an ihrer radialen Außenseite Zentrierflächen 66 auf, mittels denen das Steckermodul 16 unabhängig vom Bürstenträger-Bauteil 17 im Polgehäuse 12 zentriert wird. Dabei stützen sich die Zentrierflächen 66 radial nur an der Innenseite 77 der Polgehäusewand 60 ab, ohne sich dabei radial an am Bürstenträger-Bauteil 17 abzustützen. Dabei sind die axialen Aussparungen 80 des Bürstenträger-Bauteil 17 bevorzugt so groß bemessen, dass die darin eingefügten axialen Fortsätze 82 des Steckermoduls 16 die axialen Aussparungen 80 in Radialrichtung 23 und Tangentialrichtung 25 nicht berühren. In Fig. 3 sind zwei gegenüberliegende axiale Fortsätze 82 bogenförmig ausgebildet, so dass sich diese an dem korrespondierenden Kreissegment 75 der Polgehäusewand 60 abstützen. Dabei sind im Ausführungsbeispiel an den bogenförmigen axialen Fortsätzen 82 jeweils zwei Zentrierflächen 66 ausgebildet, die in Umfangsrichtung 25 voneinander getrennt angeordnet sind. An den beiden gegenüberliegenden geraden Seiten 76 der Polgehäusewand 60 ist jeweils ein axialer Fortsatz 82 mit nur einer Zentrierfläche 66 am Steckermodul 16 angeformt. Der äußere umlaufende Rand 44 der Basisplatte 32 ist als umlaufende Wand 84 ausgebildet, die mit einer ersten axialen Anlagefläche 93 axial am Flansch 94 des Polgehäuses 12 anliegt. Gegenüberliegend zum Flansch 94 weist die umlaufende Wand 84 eine zweite axiale Anlagefläche 95 für das Getriebegehäuse 14 auf. Nach der Montage des Steckermoduls 16 wird das Getriebegehäuse 14 mit dem daran angeordneten Getriebe axial an die axiale Anlagefläche 95 angelegt, und mittels Verbindungselementen 48, beispielweise Schrauben, mit dem Flansch 94 des Polgehäuses 12 verbunden. In einer bevorzugten Ausführung sind an den Anlageflächen 93, 95 jeweils Axialdichtungen 98 angeordnet - insbesondere an das Steckermodul 16 angespritzt - so dass nach dem axialen Verspannen des Polgehäuses 12 mit dem Getriebegehäuse 14 das Steckermodul 16 zwischen diesen beiden Gehäuseteilen 12, 14 eingepresst und dicht verschlossen ist. Dabei ragt die Rotorwelle 20 axial in das Getriebegehäuse 14 hinein, um das Antriebsmoment des Elektromotors über das Getriebe an das Abtriebselement 22 zu übertragen. Dazu durchgreift die Rotorwelle 20 die zentrale Aussparung 34 in der Basisplatte 32 des Steckermoduls 16. Die zentrale Aussparung 34 ist zumindest weitgehend von einer Kreiswand 35 des Steckermoduls 16 umschlossen, in die der axiale Rohrstumpf 36 des Bürstenträger-Bauteils 17 axial eingreift. Im Rohrstumpf 36 ist der Lagerkörper 38 - insbesondere ein Gleitlager - angeordnet, in dem die Rotorwelle 20 aufgenommen ist. Über den radialen Steg 30 werden elektrische Leiter 51 der Anschlusspins 42 radial in das Polgehäuse 12 hinein geführt und mit elektrischen Kontaktelementen 52 verbunden, die radial innerhalb des Polgehäuses 12 angeordnet sind. Im Ausführungsbeispiel sind die Anschlusspins 42 mit ihren elektrischen Leitern 51 als Stanzbiegeteile 50 ausgebildet, die als Einlegeteile beim Herstellen des Steckermoduls 16 mit diesem umspritzt werden. Alternativ können die Stanzbiegeteile 50 auch nach dem Herstellen des Kunststoffgehäuses des Steckmoduls 16 in dieses eingesteckt werden. Zur elektrischen Verbindung mit den Bürsten 26 des Bürstenträger-Bauteils 17 werden von diesem elektrische Verbindungen 53 zu den elektrischen Kontaktelementen 52 im Steckermodul 16 geführt und mit diesen elektrisch verbunden. Dazu wird beispielweise ein Anschlussdraht 54 der Bürsten 26 mit den elektrischen Kontaktelementen 52 verschweißt oder verlötet. In Fig. 3 stehen die elektrischen Kontaktelemente 52 als Gabelkontakte axial von der Basisplatte 32 zum Getriebegehäuse 14 hin ab, so dass nach dem Aufsetzen des Steckermoduls 16 auf das Polgehäuse 12 bequem die Schweiß- oder Lötverbindung mit den elektrischen Kontaktelementen 52 ausgebildet werden können. Des Weiteren sind im Anschluss-Stecker 18 Sensorpins 43 angeordnet, die über den radialen Steg 30 mit einem Magnetsensor 46 im Steckermodul 16 verbunden sind. Der Magnetsensor 46 kann durch die Wechselwirkung mit einem Ringmagneten 47 auf der Rotorwelle 20 die Rotorlage des Rotors 15 detektieren. Am Flansch 94 des Polgehäuses 12 sind Anschraubaugen 91 ausgeformt, durch die hindurch die Verbindungsmittel 48 mit entsprechenden Gegenaufnahmen 90 des Getriebegehäuses 14 verbunden werden können. Im einfachsten Fall sind die Verbindungselemente 48 als Schrauben ausgebildet, die in entsprechende Gewinde in der Gegenaufnahmen 90 eingreifen. Dabei kann zwischen dem Steckermodul 16 und dem Getriebegehäuse 14 ein EMV-Schild 86 angeordnet werden, das das Steckermodul 16 quer zur Axialrichtung 24 weitgehend bedeckt. Dadurch kann ein Abstrahlen von Störstrahlung aus dem Bereich der Bürsten 26 wirksam unterdrückt werden (EMV-Schild 86 ist in Fig. 3 nicht dargestellt).

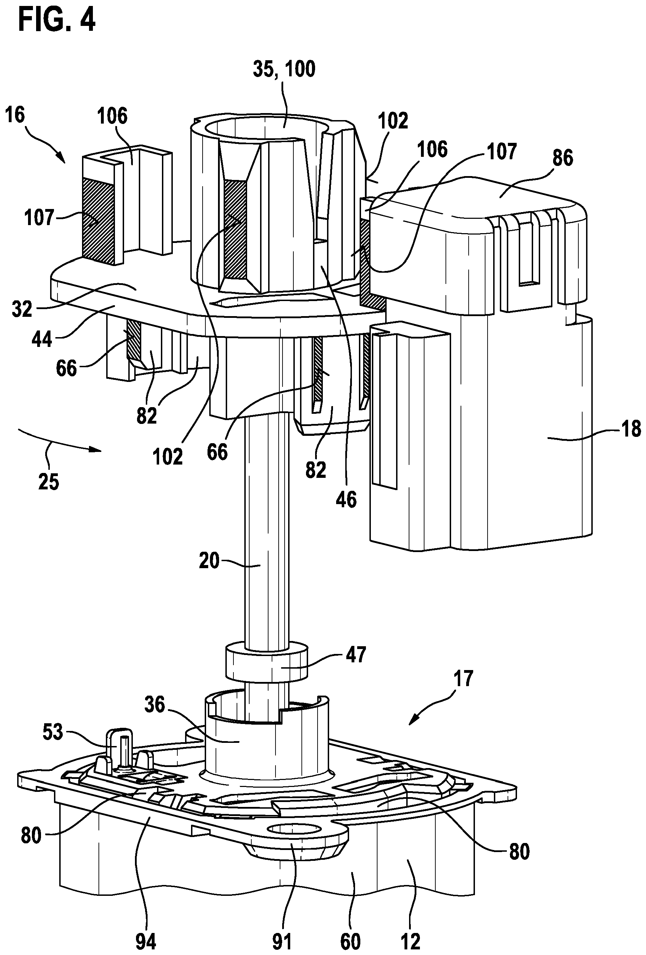

In Fig. 4 ist eine weitere Ausführung eines Steckmoduls 16 dargestellt, das alternativ zur Ausführung der Fig. 3 axial auf das Bürstenhalter-Bauteil 17 in Fig. 2 montiert werden kann. Das Steckmodul 16 weist an der Basisplatte 32 als umlaufenden Rand 44 nur die radiale Außenseite der Basisplatte 32 auf, die wiederum Teil der Außenwand 45 der elektrischen Maschine 10 ist. Am umlaufenden Rand 44 sind hierbei keine Axialdichtungen 98 angeordnet, da dieses Steckermodul 16 für eine Trockenraumanwendung vorgesehen ist. Daher entfällt hier auch die umlaufende Wand 45, an die gemäß Fig. 3 die Axialdichtungen 98 angespritzt sind. Um das Polgehäuse 12 exakt gegenüber dem Getriebegehäuse 14 zu positionieren, ist um die Kreiswand 35 des Steckermodul 16 herum ein Zentrierdom 100 ausgebildet, an dem radiale Justierflächen 102 ausgebildet sind, die sich an einer entsprechenden Zentrierdomaufnahme 104 des Getriebegehäuses 14 radial abstützen. Dadurch wird die Rotorwelle 20 bei der axialen Montage exakt im Getriebegehäuse 14 radial zentriert. Am äußeren Rand 44 des Steckermoduls 16 sind weitere Justierzapfen 106 in Axialrichtung 24 angeformt, die Justierflächen 107 in Umfangsrichtung 25 aufweisen. Diese tangentialen Justierflächen 107 liegen nach der axialen Montage an korrespondierenden Justieraufnahmen des Getriebegehäuses 14 an, um die Drehlage des Steckermoduls 16 präzise gegenüber dem Getriebegehäuse 14 auszurichten. Die axialen Fortsätze 82 zum Polgehäuse 12 hin sind identisch ausgebildet wie beim Steckermodul 16 in Fig. 3, so dass dieses Steckermodul 16 zum identischen Bürstenträger-Bauteil 17 - mit der identischen Polgehäuse-Schnittstelle - kompatibel ist. Hierbei ist die Schnittstelle zwischen dem Polgehäuse 12 und dem Getriebegehäuse 14 völlig unabhängig von dem Bürstenträger-Bauteil 17, das hierbei das Getriebegehäuse 14 nicht berührt. Die Positionierung des Getriebegehäuses 14 zum Polgehäuse 12 erfolgt daher ausschließlich über die axialen Fortsätze 82 des Steckermoduls 16, die mit ihren Zentrierflächen 66 an der Innenseite 77 des Polgehäuses 12 anliegen. Bei dieser Ausführung ist das EMV-Schild 86 nur über dem Anschluss-Stecker 18 angeordnet. Es bildet eine Art Kappe für den Anschluss-Stecker 18, der radial vollständig außerhalb des Polgehäuses 12 angeordnet ist. In einer alternativen Ausführung erstreckt sich das EMV-Schild 86 näherungsweise über das gesamte Steckermodul 16. Innerhalb (oder oberhalb) des Zentrierdoms 100 ist auf der Rotorwelle 20 ein Ringmagnet 47 angeordnet, der als Signalgeber mit einem Magnetsensor 46 zusammenwirkt, der am Steckermodul 16 radial gegenüber zum Ringmagneten 47 angeordnet ist.

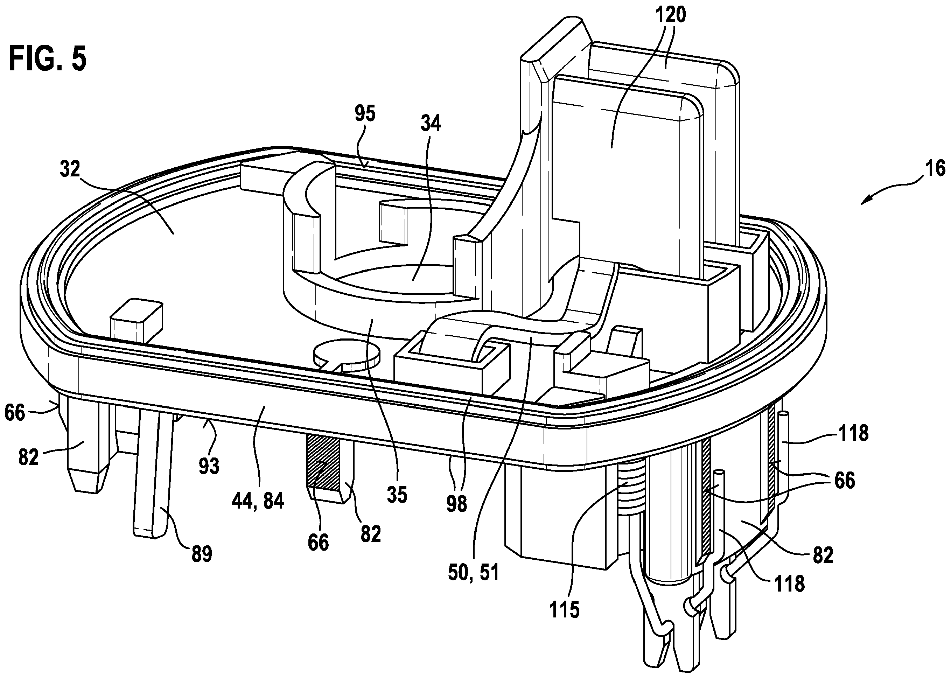

In Fig. 5 ist eine weitere Ausführung eines Steckmoduls 16 dargestellt, das alternativ zur Ausführung der Fig. 3 oder Fig. 4 axial auf das Bürstenhalter-Bauteil 17 in Fig. 2 montiert werden kann. Das Steckmodul 16 weist an der Basisplatte 32 als umlaufenden Rand 44 die umlaufende Wand 84 auf, die Teil der Außenwand 45 ist und an der die Axialdichtungen 98 zum Polgehäuse 12 und zum Getriebegehäuse 14 hin angeordnet sind. Bei dieser Ausführung weist das Steckermodul 16 keinen äußeren Anschluss-Stecker 18 auf. Vielmehr sind an der Basisplatte 32 interne axiale Steckkontakte 120 angeordnet, die als elektrische Leiter 51 die Verbindung zu einem Anschluss-Stecker 18 herstellen, der am Getriebegehäuse 14 angeordnet ist. Die Steckkontakte 120 sind einstückig mit den Leitern 51 als Biegestanzteile 50 ausgebildet, die in das Steckermodul 16 eingesteckt sind. Dabei ragen die Steckkontakte 120 als parallele Kontaktlaschen axial in das Getriebegehäuse 14 hinein, und werden dort von nicht dargestellten Gabelkontakten kontaktiert. Die Kreiswand 35 um die zentrale Aussparung 34 ist im Bereich der Steckkontakte 120 axial hochgezogen, so dass sich die Steckkontakte 120 daran radial abstützen können. Beispielsweise ist am Getriebegehäuse 14 eine Einschub- oder Plug-in-Elektronik angeordnet, die mit einer Elektronikplatine in das Getriebegehäuse hineinragt. An der Außenseite der Einschub-Elektronik ist dann der äußere Anschluss-Stecker 18 ausgebildet zur Kontaktierung mit einer Stromquelle. Die axialen Steckkontakte 120 kontaktieren die Elektronikplatine im Getriebegehäuse 14 und über diese die äußeren Anschluss-Pins 42 der Einschubelektronik. Da die elektrischen Leiter 51 nicht über einen radialen Steg aus dem Steckermodul 16 herausgeführt werden, ist die umlaufende Wand 84 über den gesamten Umfang geschlossen ausgebildet, ohne radialen äußeren Fortsatz. Dabei entspricht die Geometrie der umlaufenden Wand 84 in etwa der Form des Flansches 94 des Polgehäuses 12. An der dem Polgehäuse 12 zugewandten Seite der Basisplatte 32 sind hier elektronische Bauteile 115 angeordnet, beispielsweise Entstörelemente 99. Zur Ausbildung eines Massekontakts mit dem Polgehäuse 12 ist an der radialen Außenseite des axialen Fortsatzes 82 ein freies Kontaktende 118 angeordnet, das beim Einpressen in das Polgehäuse 12 dessen Innenseite 77 elektrisch kontaktiert.

Wie aus Fig. 2 ersichtlich ist, sind radial innerhalb der axialen Aussparungen 80 im Bürstenträger-Bauteil 17 axiale Löcher 88 ausgebildet, in die hinein bei der axialen Montage des Steckermoduls 16 daran angeformte Entriegelungs-Stifte 89 axial eingreifen, um die Bürsten 26 aus einer Montageposition zu entriegeln, damit sie dann radial am Kommutator 55 anliegen. Des Weiteren sind im Bürstenträger-Bauteil 17 in den Zuleitungen zu den Bürsten 26 Entstördrosseln 99 angeordnet, die eventuell auftretende Spannungsspitzen an den Bürsten 26 ausgleichen. Alternativ zu der elektrischen Kontaktierung des Bürstenhalter-Bauteils 17 mit dem Steckermodul 16 über den in den elektrischen Kontaktelementen 52 befestigten Anschlussdraht 54, kann im Steckermodul 16 und im Bürstenhalter-Bauteil 17 eine Steckverbindung 53 ausgebildet werden, bei der der elektrische Kontakt beispielsweise über Schneidklemmverbindungen oder Federkontakte direkt bei der Montage des Steckermoduls 16 auf das Bürstenträger-Bauteil 17 hergestellt wird.

Zur Realisierung eines Motor-Baukastens wird erfindungsgemäß für alle Varianten immer das identische Bürstenträger-Bauteil 17 verwendet, da das Spritzgusswerkzeug für dieses Bauteil sehr aufwendig herzustellen ist. Entsprechend wird die Schnittstelle des Bürstenträger-Bauteils 17 zum Polgehäuse 12 ebenfalls immer identisch ausgebildet, so dass die Zentrierung des Bürstenträger-Bauteils 17 über die Zentrierflächen 67 an der Innenseite 77 der Polgehäusewand 60 immer gleichbleibend ist. Hingegen kann beispielsweise die Länge des Polgehäuses 12 und des Rotors 15 entsprechend der notwendigen Leistung variiert werden. Ebenfalls wird das Steckermodul 16 an den jeweiligen Kundenstecker und an die entsprechenden Elektronik-Anforderungen angepasst. In einer Variante weist die elektrische Maschine 10 keine Leiterplatte mit Elektronikbauteilen auf, sondern alle notwendigen elektronischen Bauteile werden direkt in das Steckermodul 16 eingefügt. So können weitere Entstör- und/oder Schutzelemente oder unterschiedliche Sensoren im Steckermodul 16 verbaut werden. Dabei kann insbesondere auch ein Entstörbauteil radial außerhalb des Polgehäuses 12 im Anschluss-Stecker 18 angeordnet werden. Alternativ kann die elektrische Kontaktierung der Bürsten 26 mit dem Steckermodul 16 mittels Steckkontakten 53 realisiert werden, bei denen direkt mit der axialen Montage des Steckermoduls 16 entsprechende Steckkontakte des Steckermoduls 16 und des Bürstenträger-Bauteils 17 axial ineinander - insbesondere federnd - eingreifen.

Es wird darauf hingewiesen, dass die in den Figuren dargestellte konkrete Form des Polgehäuses 12, des Getriebegehäuses 14 und des Steckermoduls 16 an die entsprechende Anwendung der elektrischen Maschine 10 angepasst werden kann. So kann beispielsweise das Steckermodul 16 je nach Anforderung unterschiedliche elektronische Komponenten 115, wie Entstörelemente 99 oder Sensoren 46 oder einen Thermoschutz aufnehmen. Dabei kann auch eine kleine Sensorplatine auf dem Steckermodul 16 angeordnet werden, die mit einem Gebermagneten 47 auf der Rotorwelle 20 zusammen wirkt. Ebenfalls kann die Ausgestaltung der Anschluss-Pins 42, 43 variiert werden und beispielsweise mit dem Steckermodul 16 umspritzt werden oder in dieses eingeclipst werden. Optional kann eine zusätzliche EMV-Abschirmung 86 auf dem Steckermodul 16 angeordnet werden oder beispielsweise der Stecker-Deckel mit einer metallischen Abschirmung versehen sein. In einer alternativen nicht dargestellten Ausführung kann sich der Steckerkragen 40 mit den Anschlusspins 42 auch in Radialrichtung 23 oder Tangentialrichtung 25 zur Rotorwelle 20 erstrecken. Alternativ kann das Steckermodul 16 auch mittels einer Steckverbindung mit dem Bürstenträger-Bauteil 17 verbunden sein, insbesondere mittels einer Schneid-KlemmVerbindung.

## Patentansprüche

1. Elektrische Maschine (10) insbesondere zum Verstellen beweglicher Teile im Kraftfahrzeug, mit einem auf einer Rotorwelle (20) angeordneten Kommutator (55), der mittels elektrischer Bürsten (26) mit einer Stromquelle elektrisch leitend verbindbar ist, wobei die elektrischen Bürsten (26) an einem Bürstenträger-Bauteil (17) befestigt sind, das sich radial unmittelbar an einer Innenwand (77) eines Polgehäuses (12) abstützt, und mit einem Steckermodul (16), das elektrische Leiter (51) zur Verbindung mit einem äußeren Anschluss-Stecker (18) aufweist, wobei das Steckermodul (16) axiale Fortsätze (82) aufweist, die in korrespondierende axiale Aussparungen (80) im Bürstenträger-Bauteil (17) eingreifen, wobei die axialen Aussparungen (80) im Bürstenträger-Bauteil (17) größer als die korrespondierenden axialen Fortsätze (82) des Steckermoduls (16) ausgebildet sind und sich die axialen Fortsätze (82) des Steckermoduls (16) ebenfalls unmittelbar radial an der Innenwand (77) des Polgehäuses (12) jedoch radial nicht am Bürstenträger-Bauteil (17) abstützten, **dadurch gekennzeichnet, dass das Steckermodul (16) mittels seiner an einer Basisplatte (32) angeformten axialen Fortsätze (82) direkt an der Innenseite** des **Polgehäuses (12) zentriert ist,** wobei die Rotorwelle axial durch die Basisplatte (32) hindurchragt und wobei **sowohl das Steckermodul (16), als auch das** Bürstenträger-Bauteil **(17) an ihrem jeweiligen Umfang Zentrier- bzw. Positionierflächen (66, 67) ausbilden, die sich unabhängig voneinander jeweils radial direkt am Polgehäuse (12) abstützen.**

2. Elektrische Maschine (10) nach Anspruch 1, **dadurch gekennzeichnet, dass die Basisplatte (32) des Steckermoduls (16)** einen umlaufenden Rand (44) aufweist, der axial an einem Flansch (94) des Polgehäuses (12) anliegt, wobei die Basisplatte (32) des Steckermoduls (16) eine zentrale Aussparung (34) aufweist, durch die hindurch die Rotorwelle (20) aus dem Polgehäuse (12) heraus ragt -und insbesondere der äußere Anschluss-Stecker (18) mittels eines radialen Stegs (30) mit der Basisplatte (32) des Steckermoduls (16) verbunden ist.

3. Elektrische Maschine (10) nach Anspruch 1 oder 2, **dadurch gekennzeichnet, dass** das Steckermodul (16) als Kunststoff-Spritzgussteil ausgebildet ist, wobei im äußeren Anschluss-Stecker (18) metallische Pins (42, 43) angeordnet sind, die im Steckermodul (16) eingespritzt oder eingesteckt sind, wobei der äußere Anschluss-Stecker (18) insbesondere einteilig mit dem Steckermodul (16) hergestellt ist.

4. Elektrische Maschine (10) nach einem der vorhergehenden Ansprüche, **dadurch gekennzeichnet, dass** zumindest zwei axiale Fortsätze (82) des Steckermoduls (16) radial gegenüberliegend zur Rotorwelle (20) angeordnet sind und jeweils mindestens eine Zentrierfläche (66) aufweisen, mit denen sich das Steckermodul (16) radial an der Innenseite (77) des Polgehäuses (12) abstützt.

5. Elektrische Maschine (10) nach einem der vorhergehenden Ansprüche, **dadurch gekennzeichnet, dass** mindestens zwei axiale Fortsätze (82) des Steckermoduls (16) eine kreisförmig gewölbte radiale Außenseite als Zentrierfläche (66) aufweisen, die an je einem korrespondierenden kreisförmigen Abschnitt (75) der Innenseite (77) des Polgehäuses (12) anliegen, um das Steckermodul (16) zu zentrieren.

6. Elektrische Maschine (10) nach einem der vorhergehenden Ansprüche, **dadurch gekennzeichnet, dass** das Polgehäuse (12) an seinem Flansch (94) einen abgeflachten Kreisquerschnitt mit zwei parallelen gegenüberliegenden Seitenflächen (76) aufweist, an denen jeweils mindestens ein axialer Fortsatz (82) mit seiner Zentrierfläche (66) radial anliegt.

7. Elektrische Maschine (10) nach einem der vorhergehenden Ansprüche, **dadurch gekennzeichnet, dass** die axialen Aussparungen (80) am Bürstenträger-Bauteil (17) an dessen radialer Umfangskontur (64) ausgebildet sind.

8. Elektrische Maschine (10) nach einem der vorhergehenden Ansprüche, **dadurch gekennzeichnet, dass** axial gegenüberliegend zum Polgehäuse (12) ein Getriebegehäuse (14) mit einem Flansch (92) am Steckermodul (16) anliegt, in das die Rotorwelle (20) zur Drehmomentübertragung axial hineinragt, wobei der umlaufende Rand (44) des Steckermoduls (16) als eine Umfangswand (84) ausgebildet ist, die Teil des Außengehäuses (45) der elektrischen Maschine (10) ist, wobei insbesondere der Flansch (92) des Getriebegehäuses (14) nicht unmittelbar am Polgehäuse (12) anliegt.

9. Elektrische Maschine (10) nach einem der vorhergehenden Ansprüche, **dadurch gekennzeichnet, dass** an der Umfangswand (84) mindestens eine Axialdichtung (98) ausgebildet, vorzugsweise angespritzt, ist, die das Steckermodul (16) gegenüber dem Flansch (94) des Polgehäuses (12) und/oder dem Flansch (92) des Getriebegehäuses (14) bezüglich Schmutz und Wasser abdichtet.

10. Elektrische Maschine (10) nach einem der vorhergehenden Ansprüche, **dadurch gekennzeichnet, dass** am Steckermodul (16) sich axial in das Getriebegehäuse (14) hinein erstreckende Steckkontakte (120) angeordnet, insbesondere eingesteckt, sind, die als elektrische Leiter (51) die Bürsten (26) mit einem Anschluss-Stecker (18) verbinden, der am Getriebegehäuse (14) angeordnet ist, wobei vorzugsweise der Anschluss-Stecker (18) an einer Außenseite einer Einschubelektronik ausgebildet ist, dessen Elektronikplatinein das Getriebegehäuse (14) eingeschoben ist.

11. Elektrische Maschine (10) nach einem der vorhergehenden Ansprüche, **dadurch gekennzeichnet, dass** axial zwischen dem Getriebegehäuse (14) und dem Steckermodul (16) ein metallisches EMV-Abschirmschild (86) angeordnet ist, das im Wesentlichen die gesamte Fläche der Basisplatte (32) und/oder insbesondere des äußeren Anschluss-Steckers (18) -abdeckt, abgesehen von einem zentralen Durchbruch (34) für die Rotorwelle (20).

12. Elektrische Maschine (10) nach einem der vorhergehenden Ansprüche, **dadurch gekennzeichnet, dass** am Steckermodul (16) ein Zentrierdom (100) ausgebildet ist, der die zentrale Aussparung (34) des Bürstenträger-Bauteil (17) und die Rotorwelle (20) umschließt, wobei der Zentrierdom (100) bei der Montage axial in eine Zentrierdom-Aufnahme (104) des Getriebegehäuses (14) eingefügt wird, und insbesondere am Umfangsrand (44) Justierflächen (107) bezüglich der Tangentialrichtung (25) angeformt sind, die die Drehlage des Steckermoduls (16) zum Getriebegehäuse (14) exakt ausrichten.

13. Elektrische Maschine (10) nach einem der vorhergehenden Ansprüche, **dadurch gekennzeichnet, dass** am Flansch (94) oder an der Innenseite (77) des Polgehäuses (12) axiale Anschläge (97) ausgebildet sind, an denen sich das Bürstenträger-Bauteil (17) axial abstützt, wobei vorzugsweise das Steckermodul
(16) axial über dem Bürstenträger-Bauteil (17) befestigt ist und ein axiales Verrutschen des Bürstenträger-Bauteils (17) verhindert.

14. Elektrische Maschine (10) nach einem der vorhergehenden Ansprüche, **dadurch gekennzeichnet, dass** an der radialen Umfangskontur (64) des Bürstenträger-Bauteil (17) radiale Positionierflächen (67) ausgebildet sind, die die Position der Bürsten (26) gegenüber dem Kommutator (55) zentrieren, wobei die Bürsten (26) bevorzugt als Hammerbürsten (27) ausgebildet sind, die mittels Federarmen am Bürstenträger-Bauteil (17) befestigt sind.

15. Systembaukasten mit einer elektrischen Maschine (10) nach einem der vorhergehenden Ansprüche, **dadurch gekennzeichnet, dass** das Bürstenträger- Bauteil (17) für verschiedene Anwendungen von elektrischen Maschinen (10) immer gleichbleibend ausgebildet ist, und das Steckermodul (16) an die Kundenanforderungen angepasst wird, wobei vorzugsweise der äußere Anschluss-Stecker (18) radial vollständig außerhalb des Polgehäuses (12) angeordnet ist und die Pins (42, 43) sich in Axialrichtung (24) oder Radialrichtung oder Tangentialrichtung (25) erstrecken.

## Claims

1. Electrical machine (10), in particular for adjusting moving parts in a motor vehicle, having a commutator (55) which is arranged on a rotor shaft (20) and can be electrically conductively connected to a power source by means of electric brushes (26), wherein the electric brushes (26) are fastened to a brush carrier component (17) which is radially supported directly against an inner wall (77) of a pole housing (12), and having a plug module (16) which has electrical conductors (51) for connection to an outer connection plug (18), wherein the plug module (16) has axial projections (82) which engage into corresponding axial cutouts (80) in the brush carrier component (17), wherein the axial cutouts (80) in the brush carrier component (17) are larger than the corresponding axial projections (82) of the plug module (16) and the axial projections (82) of the plug module (16) are likewise directly supported radially against the inner wall (77) of the pole housing (12) but not radially against the brush carrier component (17), **characterized in that** the plug module (16), by means of its axial projections (82) which are integrally formed on a base plate (32), is centred directly on the inner side of the pole housing (12), wherein the rotor shaft protrudes axially through the base plate (32), and wherein both the plug module (16) and also the brush carrier component (17) have centring or positioning surfaces (66, 67), which are in each case radially supported directly on the pole housing (12) independently of one another, formed on their respective circumference.

2. Electrical machine (10) according to Claim 1, **characterized in that** the base plate (32) of the plug module (16) has an encircling edge (44) which bears axially against a flange (94) of the pole housing (12), wherein the base plate (32) has a central cutout (34) through which the rotor shaft (20) protrudes out of the pole housing (12) and in particular the outer connection plug (18) is connected to the base plate (32) of the plug module (16) by means of a radial web (30).

3. Electrical machine (10) according to Claim 1 or 2, **characterized in that** the plug module (16) is in the form of a plastic injection-moulded part, wherein metal pins (42, 43) are arranged in the outer connection plug (18) and are injection-moulded or inserted into the plug module (16), wherein the outer connection plug (18) is, in particular integrally, produced with the plug module (16).

4. Electrical machine (10) according to one of the preceding claims, **characterized in that** at least two axial projections (82) of the plug module (16) are arranged radially opposite the rotor shaft (20) and each have at least one centring surface (66) by way of which the plug module (16) is radially supported against the inner side (77) of the pole housing (12).

5. Electrical machine (10) according to one of the preceding claims, **characterized in that** at least two axial projections (82) of the plug module (16) have a radial outer side, which is curved in the shape of a circle, as centring surface (66), which radial outer sides bear against in each case one corresponding circular section (75) of the inner side (77) of the pole housing (12) in order to centre the plug module (16).

6. Electrical machine (10) according to one of the preceding claims, **characterized in that** the pole housing (12), on its flange (94), has a flattened circular cross section with two parallel opposite side faces (76) against which in each case at least one axial projection (82) radially bears by way of its centring surface (66).

7. Electrical machine (10) according to one of the preceding claims, **characterized in that** the axial cutouts (80) on the brush carrier component (17) are formed on the radial circumferential contour (64) of the said brush carrier component.

8. Electrical machine (10) according to one of the preceding claims, **characterized in that**, axially opposite the pole housing (12), a gear mechanism housing (14), by way of a flange (92), bears against the plug module (16), into which gear mechanism housing the rotor shaft (20) axially protrudes for torque transmission, wherein the encircling edge (44) of the plug module (16) is in the form of a circumferential wall (84) which is part of the outer housing (45) of the electrical machine (10), wherein in particular the flange (92) of the gear mechanism housing (14) does not bear directly against the pole housing (12).

9. Electrical machine (10) according to one of the preceding claims, **characterized in that** at least one axial seal (98) is formed on, preferably injection-moulded onto, the circumferential wall (84), which axial seal seals off the plug module (16) from the flange (94) of the pole housing (12) and/or from the flange (92) of the gear mechanism housing (14) with respect to dirt and water.

10. Electrical machine (10) according to one of the preceding claims, **characterized in that** plug-in contacts (120) which extend axially into the gear mechanism housing (14) are arranged on, in particular inserted into, the plug module (16), which plug-in contacts, as electrical conductors (51), connect the brushes (26) to a connection plug (18) which is arranged on the gear mechanism housing (14), wherein the connection plug (18) is preferably formed on an outer side of an insert electronics system, the electronics printed circuit board of which insert electronics system is inserted into the gear mechanism housing (14).

11. Electrical machine (10) according to one of the preceding claims, **characterized in that** a metal EMC shielding plate (86) is arranged axially between the gear mechanism housing (14) and the plug module (16), which metal EMC shielding plate substantially covers the entire surface area of the base plate (32) and/or in particular of the outer connection plug (18), apart from a central aperture (34) for the rotor shaft (20).

12. Electrical machine (10) according to one of the preceding claims, **characterized in that** a centring dome (100) is formed on the plug module (16), which centring dome encloses the central cutout (34) of the brush carrier component and the rotor shaft (20), wherein the centring dome (100) is axially inserted into a centring dome receptacle (104) of the gear mechanism housing (14) during assembly, and adjusting surfaces (107) in respect of the tangential direction (25) are integrally formed, in particular, on the circumferential edge (44), which adjusting surfaces precisely align the rotary position of the plug module (16) with respect to the gear mechanism housing (14).

13. Electrical machine (10) according to one of the preceding claims, **characterized in that** axial stops (97) are formed on the flange (94) or on the inner side (77) of the pole housing (12), the brush carrier component (17) being axially supported against the said axial stops, wherein the plug module (16) is preferably axially fastened by means of the brush carrier component (17) and prevents axial slipping of the brush carrier component (17).

14. Electrical machine (10) according to one of the preceding claims, **characterized in that** radial positioning surfaces (67) are formed on the radial circumferential contour (64) of the brush carrier component (17), which radial positioning surfaces centre the position of the brushes (26) in relation to the commutator (55), wherein the brushes (26) are preferably formed as hammer-type brushes (27) which are fastened to the brush carrier component (17) by means of spring arms.

15. Modular system comprising an electrical machine (10) according to one of the preceding claims, **characterized in that** the brush carrier component (17) always remains the same for different applications of electrical machines (10), and the plug module (16) is matched to customer requirements, wherein the outer connection plug (18) is preferably arranged radially entirely outside the pole housing (12) and the pins (42, 43) extend in the axial direction (24) or radial direction or tangential direction (25).

## Revendications

1. Machine électrique (10), en particulier pour ajuster des pièces mobiles dans un véhicule automobile, comprenant un commutateur (55) disposé sur un arbre de rotor (20) qui peut être relié de manière électriquement conductrice à une source de courant au moyen de balais électriques (26), les balais électriques (26) étant fixés à un composant porte-balais (17) qui prend appui radialement directement sur une paroi intérieure (77) d'une carcasse polaire (12), et comprenant un module enfichable (16) qui présente des conducteurs électriques (51) à relier à une fiche de raccordement extérieure (18), le module enfichable (16) présentant des pattes axiales (82) qui s'engagent dans des évidements axiaux (80) correspondants dans le composant porte-balais (17), les évidements axiaux (80) étant réalisé dans le composant porte-balais (17) pour être plus grands que les pattes axiales (82) correspondantes du module enfichable (16) et les pattes axiales (82) du module enfichable (16) prenant appui également directement radialement sur la paroi intérieure (77) de la carcasse polaire (12) mais pas radialement sur le composant porte-balais (17), **caractérisée en ce que** le module enfichable (16) est centré au moyen de ses pattes axiales (82) rapportées à une plaque de base (32) directement sur la face intérieure de la carcasse polaire (12), dans laquelle l'arbre de rotor fait patte axialement à travers la plaque de base (32) et dans laquelle aussi bien le module enfichable (16) que le composant porte-balais (17) réalisent sur leur circonférence respective des surfaces de centrage ou de positionnement (66, 67) qui prennent appui radialement directement sur la carcasse polaire (12), indépendamment les unes des autres respectivement.

2. Machine électrique (10) selon la revendication 1, **caractérisée en ce que** la plaque de base (32) du module enfichable (16) présente un bord périphérique (44) qui est axialement adjacent à un flasque (94) de la carcasse polaire (12), la plaque de base (32) du module enfichable (16) présentant un évidement central (34) à travers lequel l'arbre de rotor (20) fait saillie de la carcasse polaire (12), et en particulier la fiche de raccordement (18) est reliée à la plaque de base (32) du module enfichable (16) au moyen d'une barrette radiale (30).

3. Machine électrique (10) selon la revendication 1 ou 2, **caractérisée en ce que** le module enfichable (16) est réalisé sous forme de pièce moulée par injection, des broches métalliques (42, 43) étant disposées dans la fiche de raccordement extérieure (18) qui sont injectées ou enfichées dans le module enfichable (16), la fiche de raccordement extérieure (18) étant fabriquée en particulier d'un seul tenant avec le module enfichable (16).

4. Machine électrique (10) selon l'une quelconque des revendications précédentes, **caractérisée en ce qu'**au moins deux pattes axiales (82) du module enfichable (16) sont disposées radialement à l'opposé de l'arbre de rotor (20) et présentent respectivement au moins une surface de centrage (66) par laquelle le module enfichable (16) prend appui radialement sur la face intérieure (77) de la carcasse polaire (12).

5. Machine électrique (10) selon l'une quelconque des revendications précédentes, **caractérisée en ce qu'**au moins deux pattes axiales (82) du module enfichable (16) présentent une face extérieure radiale courbée en forme de cercle en tant que surface de centrage (66) qui est adjacente à une partie circulaire (75) correspondante respectivement de la face intérieure (77) de la carcasse polaire (12) pour centrer le module enfichable (16).

6. Machine électrique (10) selon l'une quelconque des revendications précédentes, **caractérisée en ce que** la carcasse polaire (12) présente au niveau de son flasque (94) une section transversale circulaire aplatie munie de deux surfaces latérales (76) opposées parallèles auxquelles respectivement au moins une patte axiale (82) est adjacente par sa face de centrage (66).

7. Machine électrique (10) selon l'une quelconque des revendications précédentes, **caractérisée en ce que** les évidements axiaux (80) sur le composant porte-balais (17) sont réalisés au niveau du contour circonférentiel radial (64) de celui-ci.

8. Machine électrique (10) selon l'une quelconque des revendications précédentes, **caractérisée en ce que** axialement à l'opposé de la carcasse polaire (12), un carter d'engrenage (14) muni d'un flasque (92) est adjacent au module enfichable (16) dans lequel l'arbre de rotor (20) fait saillie axialement pour la transmission de couple, dans laquelle le bord périphérique (44) du module enfichable (16) est réalisé sous la forme d'une paroi circonférentielle (84) qui fait partie du carter extérieur (45) de la machine électrique (10), dans laquelle en particulier le flasque (92) du carter d'engrenage (14) n'est pas directement adjacent à la carcasse polaire (12).

9. Machine électrique (10) selon l'une quelconque des revendications précédentes, **caractérisée en ce que** sur la paroi circonférentielle (84) au moins un joint axial (98) est réalisé, de préférence surmoulé, qui assure l'étanchéité à la saleté et à l'eau du module enfichable (16) par rapport au flasque (94) de la carcasse polaire (12) et/ou au flasque (92) du carter d'engrenage (14).

10. Machine électrique (10) selon l'une quelconque des revendications précédentes, **caractérisée en ce que** sur le module enfichable (16), des contacts à fiche (120) s'étendant dans le carter d'engrenage (14) sont disposés, en particulier enfichés, qui relient en tant que conducteurs (51) les balais (26) à la fiche de raccordement (18) qui est disposée sur le carter d'engrenage (14), la fiche de raccordement (18) étant de préférence réalisée sur une face extérieure d'un module électronique insérable dont les platines électroniques sont insérées dans le carter d'engrenage (14).

11. Machine électrique (10) selon l'une quelconque des revendications précédentes, **caractérisée en ce qu'**entre le carter d'engrenage (14) et le module enfichable (16), un blindage CEM métallique (86) est disposé axialement et recouvre substantiellement toute la surface de la plaque de base (32) et/ou en particulier de la fiche de raccordement extérieure (18), à l'exception d'un perçage central (34) pour l'arbre de rotor (20).

12. Machine électrique (10) selon l'une quelconque des revendications précédentes, **caractérisée en ce que** sur le module enfichable (16), un dôme de centrage (100) est réalisé qui entoure l'évidement central (34) du composant porte-balais (17) et l'arbre de rotor (20), le dôme de centrage (100) étant inséré axialement lors du montage dans un logement de dôme de centrage (104) du carter d'engrenage (14), et en particulier sur le bord circonférentiel (44), des surfaces d'ajustage (107) sont rapportées par rapport à la direction tangentielle (25) et alignent exactement la position angulaire du module enfichable (16) par rapport au carter d'engrenage (14).

13. Machine électrique (10) selon l'une quelconque des revendications précédentes, **caractérisée en ce que** sur le flasque (94) ou sur la face intérieure (77) de la carcasse polaire (12), des butées axiales (97) sont réalisées sur lesquelles le composant porte-balais (17) prend appui axialement, le module enfichable (16) étant de préférence fixé axialement au-dessus du composant porte-balais (17) et empêchant un décentrage axial du composant porte-balais (17).

14. Machine électrique (10) selon l'une quelconque des revendications précédentes, **caractérisée en ce que** sur le contour circonférentiel radial (64) du composant porte-balais (17), des surfaces de positionnement radiales (67) sont réalisées, qui centrent la position des balais (26) par rapport au commutateur (55), les balais (26) étant de préférence réalisés sous la forme de balais marteaux (27) qui sont fixés au composant porte-balais (17) au moyen de bras à ressort.

15. Système de construction modulaire comprenant une machine électrique (10) selon l'une quelconque des revendications précédentes, **caractérisé en ce que** le composant porte-balais (17) est réalisé de manière toujours identique pour différentes applications des machines électriques (10), et le module enfichable (16) est adapté aux exigences des clients, la fiche de raccordement extérieure (18) étant de préférence disposée radialement entièrement à l'extérieur de la carcasse polaire (12) et les broches (42, 43) s'étendant dans la direction axiale (24) ou radiale ou dans la direction tangentielle (25).
